# EUROPÄISCHE PATENTSCHRIFT

(11) **EP 1 595 441 B1**
(45) Veröffentlichungstag und Bekanntmachung des Hinweises auf die Patenterteilung: **31.12.2008**
(21) Anmeldenummer: 05009890.4
(22) Anmeldetag: 06.05.2005
(51) Int. Cl.: A01F 15/07

(54) **Maschine zum Aufnehmen und Pressen von landwirtschaftlichem Erntegut**
Device for picking up and pressing of harvested crop
Dispositif pour ramasser et compacter des matières récoltées

(30) Priorität: 11.05.2004 DE 102004023697
(43) Veröffentlichungstag der Anmeldung: 16.11.2005
(73) Patentinhaber: Maschinenfabrik Bernard Krone GmbH, 48480 Spelle (DE)
(72) Erfinder: Krone, Bernard Dr.-Ing. E.h., 48480 Spelle (DE); Martensen, Klaus Dr.-Ing., 48477 Hörstel (DE)

(56) Entgegenhaltungen:
- WO-A-97/03550
- FR-A- 2 793 382
- US-A- 3 901 007

## Beschreibung

Die Erfindung betrifft eine Maschine zum Aufnehmen und Pressen von landwirtschaftlichem Erntegut mit einer von zumindest einer Ballenformeinrichtung gebildeten, aufklappbaren Wickelkammer zur Erzeugung eines Ballens, wobei die Ballenformeinrichtung über zumindest eine ortsfeste Antriebsrolle geführt ist und während einer Ballenformphase eine Wickelkammer ausbildet, welche sich von einer ein geringes Volumen an Erntegut aufnehmenden Größe in eine ein größeres Volumen aufnehmende Größe ausdehnen kann und mit einem Speicher zum Ausgleich des überschüssigen Teils der Ballenformeinrichtung versehen ist.

Aus der US 3,901,007 ist eine Ballenpresse bekannt, bei der ein Erntegutballen in einer Wickelkammer durch Anlage an zwei sich bewegenden Teilen einer Ballen-formeinrichtung gebildet wird. Einer dieser beiden Wickelbodenabschnitte, der durch einen endlos umlaufenden Wickelbodenteil gebildet wird, ist nachgiebig gestaltet. Da bei wachsendem Erntegutballen die Anlagefläche des Wickelbodens an dem Erntegutballen vergrößert wird, ist es notwendig, den zusätzlich benötigten Wickelboden aus einem Wickelbodenspeicher nachzuliefern. Dieser besteht aus schwenkbaren Umlenkeinrichtungen, der gegen eine, letztendlich eine Presskraft auf den Erntegutballen ausübende Spannkraft verschwenkt wird und damit Wickelboden freigibt. Die beschriebene Ballenformeinrichtung der US 3,901,007 ist konstruktiv aufwendig und somit nur zeit- und kostenintensiv zu bauen.

Aus der WO 9730550 A1 ist eine Rundballenpresse mit veränderlichem Pressraum bekannt geworden, bei der sich der Pressraum ausgehend von einem kleinen Ballenkernbildungsraum bis hin zu seiner maximalen Größe ausdehnen kann. Während der Ballenbildung ist es zur Vergrößerung des veränderlichen Pressraumes erforderlich, dass weitere Riemenlänge aus einer Speichereinrichtung zur Umgrenzung des entstehenden Rundballens frei zu geben ist. Dazu sind in der WO 9730550 A1 ein primärer und ein sekundärer Riemenspanner vorgesehen, die die Riemen in unterschiedlichen Kombinationsmöglichkeiten mit einer Presskraft beaufschlagen. Dabei ist es z. B. vorgesehen, einen Rundballen mit einem weicheren Kern herzustellen. Weiterhin sind verschiedenartige Kompressionsprogramme offenbart, die beispielsweise eine konstante Presskraft oder eine allmählich ansteigende Presskraft auf die den Pressraum umgebenden Riemen ausüben. Ebenso gibt die WO 9730550 A1 Aufschluss darüber, dass durch eine veränderliche Gestaltung der Größe des Ballenkernbildungsraumes der weiche Kem eines Rundballens unterschiedliche Durchmesser aufweisen kann und somit eine verbesserte Eignung zur Verdichtung unterschiedlichster Erntegüter gegeben ist. Nach dem Ballenkernbildungsprozess unterliegt aber auch die hier beschriebene Rundballenpresse der Funktionsweise, bei der die auf den zu formenden Rundballen einwirkende Presskraft so eingestellt bzw. vorgegeben ist, dass jederzeit die weitere Ballenbildung beendet und ein fertiger Rundballen ausgeworfen werden kann. Die Herstellung auch solcher Rundballenpressen erfordert einen hohen konstruktiven Aufwand, der verständlicherweise auch mit hohen Kosten verbunden ist.

Der vorliegenden Erfindung liegt die Aufgabe zugrunde, eine verbesserte Maschine nach dem Oberbegriff des Anspruchs 1 zu schaffen, welche sich durch eine baulich einfache Ballenformeinrichtung auszeichnet und dennoch für verschiedenen Ballengrößen anwendbar ist.

Die Aufgabe wird gelöst durch eine Maschine nach dem Oberbegriff des Anspruchs 1, welche sich dadurch auszeichnet, dass der Speicher eine den Ausschlag des Spannarms begrenzende Anschlagvorrichtung aufweist, so dass über die Anschlagvorrichtung mit einem Widerlager eine Begrenzung der weiteren Ausdehnung der Wickelkammer einleitbar ist und dass nach der Ballenformphase auf den Ballen in der Wickelkammer eine nach einem einstellbaren größeren Volumen aufbaubare Verdichtungskraft von außen nach innen durch die Ballenformeinrichtung ausgeübt wird. Entsprechend erfolgt die Freigabe einer Länge der Ballenformeinrichtung hier nur bis zum Erreichen eines vorgebbaren Durchmessers des Emtegutballens und nach Erreichen dieses Durchmessers wird von außen ein Pressdruck auf den Erntegutballen ausgeübt, der für die Verdichtung des Erntegutballens von außen nach innen sorgt.

Anders als bei den bestehenden Maschinen zum Aufnehmen und Pressen von landwirtschaftlichem Erntegut, die nach dem sogenannten Festkammerprinzip arbeiten, ist hier zum einen ein Durchmesser vorgebbar und zum anderen durch die ständige Anlage der Ballenformeinrichtung an den Erntegutballen eine gute Führung und damit eine gute Wickelung des Erntegutballens zu erreichen, ohne dass damit die im Stand der Technik beschriebenen Nachteile auftreten. So wird bei der erfindungsgemäßen Maschine bei jedem vorgebbaren Durchmesser ein Erntegutballen erzeugt, der sich durch eine von außen nach innen fortsetzende Verdichtung und damit durch formstabile Ballen mit sehr hoher Pressdichte auszeichnen.

Vorteilhafterweise weist die Spannvorrichtung des Speichers zumindest einen Kraftspeicher in Form eines Federelements auf. Durch die Verwendung eines dergestalt ausgebildeten Kraftspeichers verbilligt sich der Betrieb der Ballenformeinrichtung einer erfindungsgemäßen Maschine, da die früher üblichen, für die Aufbringung eines kontinuierlich großen Pressdrucks auf den Erntegutballen zu verwendenden und entsprechend groß dimensionierten Federelemente oder Zylinder hier entfallen können. Aufgabe des Kraftspeichers ist es lediglich, die Ballenformeinrichtung mit einer Schlupf zwischen Antriebsrolle und Ballenformeinrichtung vermeidenden Spannkraft zu beaufschlagen. Es ist auch denkbar, statt eines Federelements einen einfachen Zylinder zu verwenden.

Für eine vorteilhafte Ausbildung der Erntegutballen ist es von besonderem Vorteil, wenn die Ballenformeinrichtung Antriebsriemen umfasst, welche an den äußeren Enden von Querstäben angebracht sind, wobei die Antriebsriemen ebenso wie eine Antriebsrolle an ihrer Oberfläche eine Querprofilierung aufweisen. Die Querprofilierung kann insbesondere zwischen Antriebsrolle und Antriebsriemen eine unterschiedliche Teilung aufweisen. Dadurch wird verhindert, dass sich Erntegut zwischen Antriebsriemen und Antriebsrolle anlagert, sondern statt dessen durch die verschiedene Teilung zerschnitten wird. Des weiteren werden die für den Betrieb der Ballenformeinrichtung notwendigen Kräfte durch eine wie eben beschriebene Ausgestaltung der Ballenformeinrichtung gut übertragen.

Weitere Vorteile und Einzelheiten der Erfindung ergeben sich aus den übrigen Unteransprüchen sowie den schematisch dargestellten Abbildungen der Erfindung in der Zeichnung. In der Zeichnung zeigt:
- Fig. 1: einen Längsschnitt einer erfindungsgemäßen Maschine mit einem einen minimalen Erntegutballen ermöglichenden Ballenformeinrichtung,
- Fig. 2: den Gegenstand nach Fig. 1 mit einem einen maximalen Erntegutballen ermöglichenden Ballenformeinrichtung,
- Fig. 3: eine Anschlagstellung des Speichers gemäß Fig. 1 und
- Fig. 4: eine Anschlagstellung des Speichers gemäß Fig. 2.

Eine erfindungsgemäße Maschine 1 zum Aufnehmen und Pressen von landwirtschaftlichem Erntegut weist eine größtenteils von einer Ballenformeinrichtung 2 umgebene und gebildete Wickelkammer 3 auf. Die Wickelkammer 3 selbst besitzt eine Einlassöffnung 4, durch die allgemein mit einer Aufnahmevorrichtung 6 aufgenommenes Erntegut wie beispielsweise Heu oder Anwelkgut in die Wickelkammer 3 befördert wird. Eine Antriebsrolle 7 unterteilt die Ballenformeinrichtung 2 in ein Lasttrum 8 und ein Leertrum 9, wobei sich das Lasttrum 8 von dem Leertrum 9 dadurch unterscheidet, dass es die Antriebskräfte auf den Erntegutballen überträgt. Beiderseits der Einlassöffnung 4 angeordnete Walzen 11 begrenzen zusätzlich die Wickelkammer 3. Zu Beginn eines Ballenformvorganges liegt das Lasttrum 8 der Ballenformeinrichtung 2 zusätzlich an eine Startkammer ausbildenden Führungsvorrichtungen 12 an. Bei diesem Ausführungsbeispiel sind die Führungsvorrichtung 12 als Umlenkrollen ausgebildet, es kann sich hierbei jedoch auch um Führungsflächen handeln.

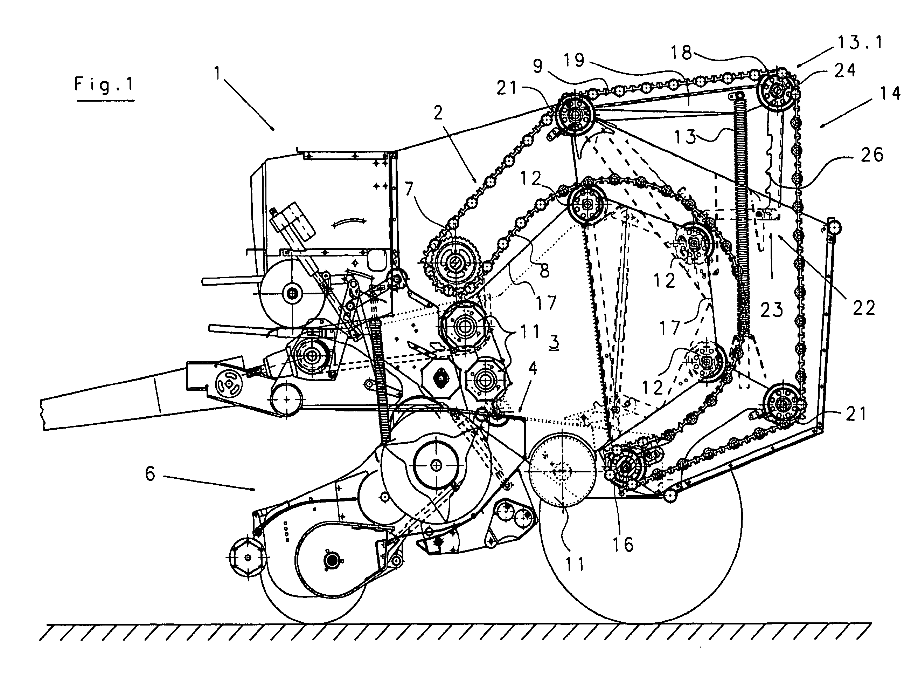

Die Ballenformeinrichtung 2 wird mit Hilfe einer Spannvorrichtung 13.1 unter Spannung gehalten, wobei die Spannvorrichtung 13.1 einen Speicher 14 zur Aufnahme bzw. Abgabe von Teilen der Ballenformeinrichtung 2 umfasst und durch einen Kraftspeicher 13 mit einer Kraft beaufschlagt werden kann, welche eine nahezu schlupffreie Übertragung des erforderlichen Antriebsmomentes zwischen der Antriebsrolle 7 und der Ballenformeinrichtung 2 sicherstellt. Dadurch liegen die zwischen der Antriebsrolle 7 und einer Umlenkrolle 16 befindlichen Abschnitte des Lasttrums 8 der Ballenformeinrichtung 2, anders als in Fig. 1 dargestellt, parallel zu den Seitenkanten 17 der die Wickelkammer 3 begrenzenden Führungsseitenwände.

Der Speicher 14 weist im wesentlichen einen mit einer Umlenkrolle 18 versehenen Spannarm 19 auf, an den der als Federelement ausgebildete Kraftspeicher 13 angreift. Füllt sich die Wickelkammer 3, so wird ein nach außen gerichteter Druck auf das Lasttrum 8 ausgeübt und das Federelement wird gestaucht. Dabei ändert sich die zwischen den Umlenkrollen 21 und 18 befindliche Länge der Ballenformeinrichtung 2 und die Erntegutballenvergrößerung geht einher mit einer Vergrößerung der Wickelkammer 3.

Eine einstellbare Begrenzungsvorrichtung zur Vorgabe eines Durchmessers des Erntegutballens ist bei diesem Ausführungsbeispiel der Erfindung als relativ zum Spannarm 19 schwenkbare Anschlagvorrichtung 22 ausgebildet, die in ein gehäusefestes Widerlager 23 eingreift. Je nach Relativposition der Anschlagvorrichtung 22 zum Spannarm 19, d. h. je nach Winkel, der zwischen der Längsachse des Spannarms 19 und der Längsachse der Anschlagvorrichtung 22 eingestellt ist, greift eine der mehreren Aufnahmen der Anschlagvorrichtung 22 in das Widerlager 23 ein und begrenzt somit die Länge der Ballenformeinrichtung 2, die von dem Speicher 14 zur Vergrößerung der Wickelkammer 3 zur Verfügung gestellt wird. Auf diese Art und Weise ist eine sehr kostengünstige und wartungseinfache Vorrichtung zur Vorgabe eines Durchmessers des Erntegutballens geschaffen.

Da die Führungsvorrichtungen 12 nicht in die anfangs gebildete Wickelkammer 3 der erfindungsgemäßen Maschine 1 eingreifen, steht zu Beginn eines Ballenformvorgangs eine im Querschnitt in etwa fünfeckige Startkammer zur Verfügung. Dies beeinflusst die Bildung eines Erntegutballenkerns positiv, da ausreichend Platz zur Verfügung steht, eine Initialrotation des in die Wickelkammer 3 beförderten Ernteguts hervorzurufen. Gleichzeitig wird das Erntegut aufgrund des Polygoneffektes gut durchgewalkt, da das gemäß Fig. 1 entlang des die Wickelkammer 3 begrenzenden fünfeckigen Randes beförderte Erntegut phasenweise gestaucht wird. Das durch die Einlassöffnung 4 in die Wickelkammer 3 transportierte Material fällt bevorzugt in den in Fahrtrichtung hinteren Teil der Wickelkammer 3 und wird durch das Lasttrum 8 in eine Rotation entgegen dem Uhrzeigersinn versetzt. Dieses entspricht in etwa auch dem Start des Wickelvorgangs bei einer Erntegutballenpresse nach dem sogenannten Festkammerprinzip. Gleichwohl ist der Speicher 14 so nachgiebig ausgelegt, dass sich die Wickelkammer 3 während ihrer Befüllung erweitern kann und die Ballenformeinrichtung 2 beispielsweise in die in Fig. 1 dargestellte Position überführt wird.

Hierbei ist es von Vorteil, dass aufgrund der nachgiebigen Anlage des in die Wickelkammer 3 hineinbeförderten Ernteguts an der Ballenformeinrichtung 2 ein guter Kontakt zwischen dieser und dem Erntegut realisiert wird, jedoch dieses bei gleichzeitig weitgehender Vermeidung eines Pressdrucks geschieht. Es bleibt somit bei einem vergleichsweise locker gewickelten Emtegutballen. Erst dann, wenn wie in Fig. 1 gezeigt, die Anschlagvorrichtung 22 mit dem Widerlager 23 in Eingriff steht, wird die weitere Ausdehnung der Wickelkammer 3 begrenzt und es baut sich bei weiter zugeführtem Material ein hoher Pressdruck auf, der ausgehend von der äußeren Schicht des Erntegutballens diesen bis hin zum Ballenkern verdichtet.

Insgesamt ist so eine Maschine 1 zum Aufnehmen und Pressen von landwirtschaftlichem Erntegut geschaffen, die Erntegutballen variabler Größen herstellen kann, diese jedoch im Unterschied zu den bisherigen variablen Maschinen eine Ballenstruktur aufweisen, die ähnlich denen einer Festkammermaschine sind.

Vorteilhafterweise ist die zum Speicher 14 gehörende Umlenkrolle 18 in Fahrtrichtung vor dem hinteren Ende der Maschine und hinter dem Zentrum des sich bildenden Erntegutballens angeordnet. Hierdurch baut die erfindungsgemäße Maschine 1 sehr kompakt.

Weiterhin ist es von Vorteil, wenn der Spannarm 19 des Speichers 14, bzw. der Spannvorrichtung 13.1 in Bezug zu einer zwischen einer Anlenkstelle des Spannarms 19 am Maschinerahmen und einer Drehachse 24 der Umlenkrolle (18) sich erstreckenden Bezugsebene in einem Winkel von 60 bis 120° kraftbeaufschlagbar ist. Die in Fig. 1 abgebildete Kraftbeaufschlagung durch das Federelement bzw. den Kraftspeicher 13 ist somit in etwa rechtwinklig zum Spannarm, was einen guten Hebelarm und somit eine gute Übertragung der vom Kraftspeicher 13 aufgebrachten Kräfte bedeutet. Idealerweise ist die Ausrichtung des Kraftspeichers 13 so gewählt, dass diese der Winkelhalbierenden der durch die Umlenkrolle 18 umgelenkten Riementrums entspricht. Weiterhin greift der Kraftspeicher 13 in der Nähe der Umlenkrolle 18 an den Spannarm 19 an, und damit in einem Bereich, in dem die von der Ballenformeinrichtung 2 auf den Spannarm 19 aufgebrachten Kräfte anliegen, wodurch die resultierenden der von der Ballenformeinrichtung 2 einwirkenden Kräfte durch die Anschlagvorrichtung 22 und den Spannarm 19 gut abgestützt ist. Die von der Ballenformeinrichtung 2 auf die Umlenkrolle 18 übertragenen Kräfte werden über die Anschlagvorrichtung 22 und das Widerlager 23 einerseits und den Spannarm 19 andererseits direkt in das Gehäuse geleitet, was eine besonders feste Abstützung gewährleistet.

Es liegt im Rahmen der Erfindung, dass die Anschlagvorrichtung mit ihren die Aufnahmen ausbildenden Nasen 26 bei gleicher Funktionalität anders ausgebildet sein kann. Die Anschlagvorrichtung 22 muss hierfür lediglich die Verschwenkung des Spannarms 19 blockieren, durch die für die Wickelkammer 3 Teile der Ballenformeinrichtung 2 freigegeben werden. Hierbei kann es sich selbstverständlich auch um stufenlos einstellbare Anschläge handeln oder um an anderen Stellen eingreifende Blockiervorrichtungen, beispielsweise kann das Widerlager 23 ebenfalls als schwenkbar am Gehäuse befestigter Arm ausgebildet sein, der in verschiedene Punkte des Spannarms 19 eingreift und damit einen Durchmesser des Erntegutballens vorgibt.

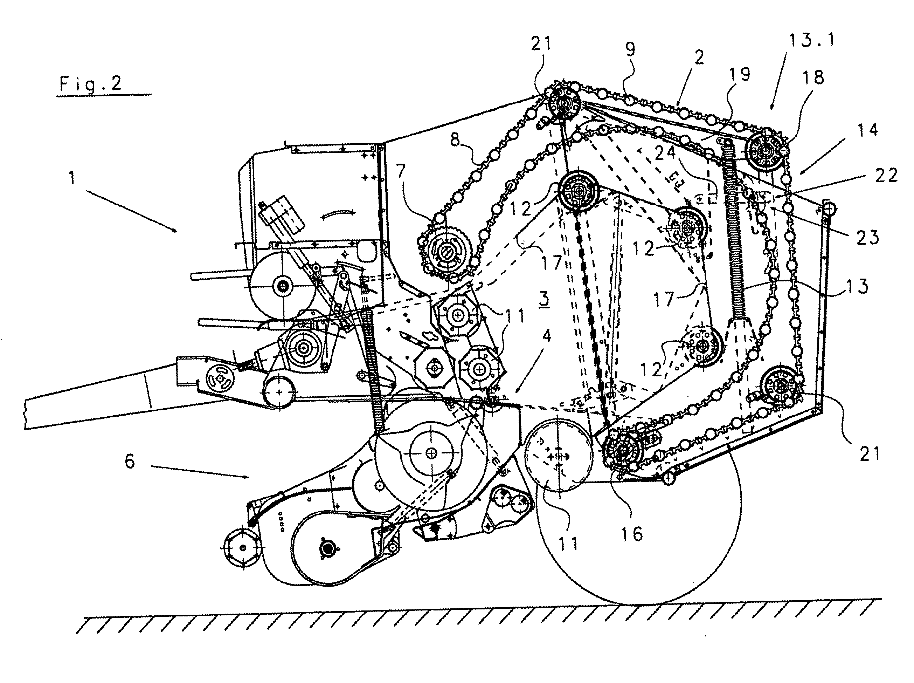

Die in Fig. 2 dargestellte Ausführungsform einer erfindungsgemäßen Maschine zeigt die maximale Größe der Wickelkammer 3, was durch den kreisbogenförmigen Abschnitt des Lasttrums 8 angedeutet wird, da der Speicher 14 die maximal mögliche Länge der Ballenformeinrichtung 2 freigegeben hat. Auch in dieser Zeichnung befindet sich die Anschlagvorrichtung 22 in Eingriff mit dem Widerlager 23, so dass keine weitere Länge der Ballenformeinrichtung 2 freigegeben werden kann.

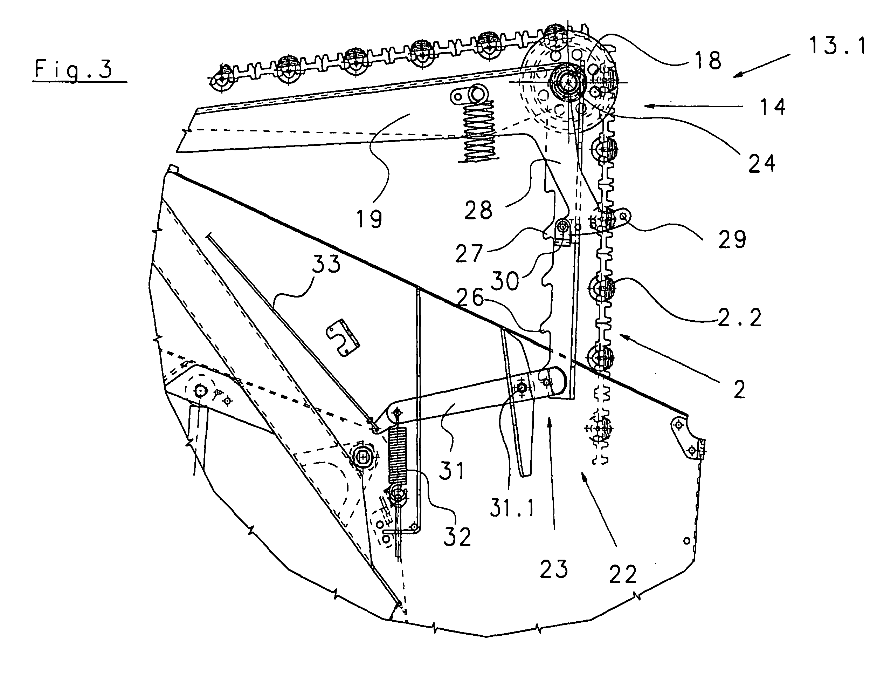

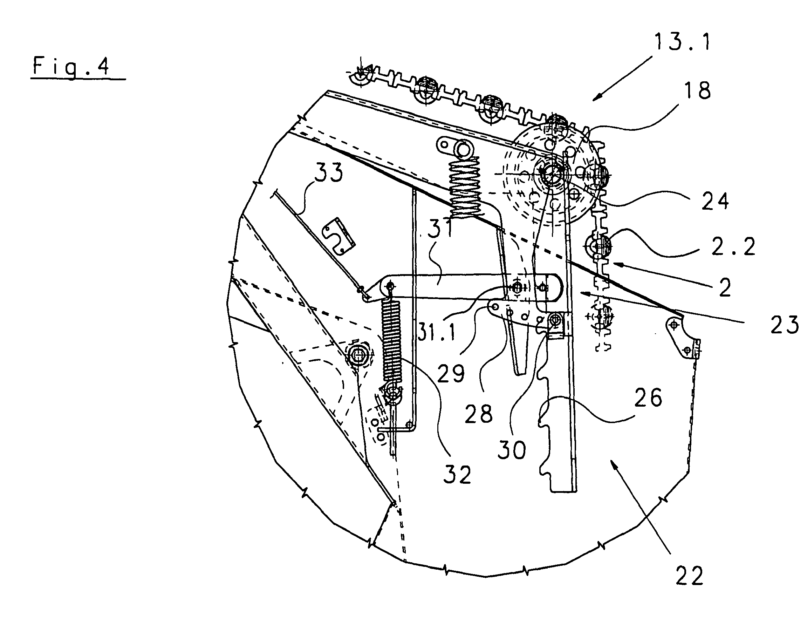

Des weiteren ist vorgesehen, wie dies auch die Figuren 3 und 4 näher verdeutlichen, dass die Ballenformeinrichtung 2 die ihren jeweiligen Seitenbereichen Tragriemen hat, an denen Querstäbe 2.2 befestigt sind. Diese sind von den Umlenkrollen 12 geführt. Damit ist ein außerordentlich leiser Betrieb der Ballenformeinrichtung ermöglicht.

Die erfindungsgemäße Maschine 1 weist in dem in Fig. 3 beschriebenen Ausführungsbeispiel zusätzlich zu der Anschlagvorrichtung 22 einen Stellarm 28 mit Ausnehmungen 29 auf, die für eine Arretierung der Anschlagvorrichtung 22 in den beschriebenen unterschiedlichen Winkelpositionen bezüglich des Spannarms 19 Sorge tragen. Hierfür greift eine Befestigung 30, die bei diesem Ausführungsbeispiel an der Anschlagvorrichtung 22 angebracht ist, lösbar in die Ausnehmungen 29 und arretiert somit die Anschlagvorrichtung 22 in den unterschiedlichen Positionen. Das Widerlager 23 weist weiterhin einen Hebelarm 31 auf, der zusammen mit einer am Gehäuse festgelegten Feder 32 die gehäusefeste Abstützung bildet. Durch die Feder 32 ist eine Beweglichkeit des Hebelarms 31 um seine Schwenkachse 31.1 gewährleistet, so dass innerhalb eines vorgebbaren Bereiches unter Mithilfe von mechanischen, elektromechanischen oder auch anderen Mitteln 33 der auf den Erntegutballen wirkende Pressdruck überprüft werden kann. In der in Fig. 4 abgebildeten Darstellung der Anschlagvorrichtung 22 ist das Widerlager 23 in Eingriff mit der obersten, durch die Nase 26 gebildeten Ausnehmung. Dieses entspricht einem Erntegutballendurchmesser, wie er in Fig. 2 durch den großen Umfang der Ballenformeinrichtung in der Wickelkammer 3 angedeutet ist.

## Patentansprüche

1. Maschine zum Aufnehmen und Pressen von landwirtschaftlichem Erntegut, wie beispielsweise Heu, Gras oder dgl., mit einer von zumindest einer Ballenformeinrichtung (2) gebildeten, aufklappbaren Wickelkammer (3) zur Erzeugung eines rollenförmigen Ballens, wobei die Ballenformeinrichtung (2) über zumindest eine ortsfeste Antriebsrolle (7) geführt ist und während einer Ballenformphase eine Wickelkammer (3) ausbildet, welche sich von einer, ein geringes Volumen an Erntegut aufnehmenden Größe in eine, ein größeres Volumen aufnehmende Größe ausdehnen kann, mit einem Speicher (14) zum Ausgleich des überschüssigen Teils der Ballenformeinrichtung (2), wobei der Speicher (14) während der Ballenformphase mit einer nachgiebig ausgebildeten Spannvorrichtung (13.1) zusammenwirkt und über die Spannvorrichtung (13.1) eine zumindest annähernd schlupffreie Übertragung des während der Ballenformphase erforderlichen Antriebsmomentes von der zumindest einen Antriebsrolle (7) auf die Ballenformeinrichtung (2) erreichbar ist, wobei der Speicher (14) einen mit einer Umlenkrolle (18) versehenen Spannarm (19) aufweist, an dem ein Kraftspeicher (13) angreift, **dadurch gekennzeichnet dass** der Speicher (14) eine den Ausschlag des Spannarms (19) begrenzende Anschlagvorrichtung (22) aufweist, so dass über die Anschlagvorrichtung (22) mit einem Widerlager (23) eine Begrenzung der weiteren Ausdehnung der Wickelkammer (3) einleitbar ist und dass nach der Ballenformphase auf den Ballen in der Wickelkammer (3) eine nach einem einstellbaren größeren Volumen aufbaubare Verdichtungskraft von außen nach innen durch die Ballenformeinrichtung (2) ausgeübt wird.

2. Maschine nach Anspruch 1, **dadurch gekennzeichnet, dass** der Kraftspeicher (13) ein Federelement ist.

3. Maschine nach Anspruch 1, **dadurch gekennzeichnet, dass** der Spannarm (19) der Spannvorrichtung (13.1) in Bezug zu einer zwischen einer Anlenkstelle des Spannarms (19) am Maschinerahmen und einer Drehachse (24) der Umlenkrolle (18) sich erstreckenden Bezugsebene unter einem Winkel von 60 bis 120° kreftbeaufschlagbar ist.

4. Maschine nach einem der Ansprüche 1 bis 3, **dadurch gekennzeichnet, dass** die Umlenkrolle (18) in Fahrtrichtung vor dem hinteren Ende der Maschine (1) angeordnet ist.

5. Maschine nach einem der Ansprüche 1 bis 4, **dadurch gekennzeichnet, dass** die Umlenkrolle (18) in Fahrtrichtung hinter dem Zentrum des sich bildenden Emtegutballens angeordnet ist.

6. Maschine nach einem der Ansprüche 1 bis 5, **dadurch gekennzeichnet, dass** der Speicher (14) Vorrichtungen zur Vorgabe eines Durchmessers des Erntegutballens aufweist.

7. Maschine nach einem der Ansprüche 1 bis 6, **dadurch gekennzeichnet, dass** die als Anschlagvorrichtung (22) ausgebildete Vorrichtung gehäusefest angeordnet und auf einen vorgebbaren Ausschlag einstellbar ist.

8. Maschine nach einem der Ansprüche 1 bis 7, **dadurch gekennzeichnet, dass** die Anschlagvorrichtung (22) durch eine Veränderung der Winkelstellung in Bezug zum Spannarm (19) auf unterschiedliche Ballengrößen einstellbar ist.

9. Maschine nach einem der Ansprüche 1 bis 8, **dadurch gekennzeichnet, dass** die Ballenformeinrichtung (2) Antriebsriemen umfasst, welche an den äußeren Enden von Querstäben (2.2) angebracht sind.

10. Maschine nach Anspruch 9, **dadurch gekennzeichnet, dass** die Antriebsriemen der Ballenformeinrichtung (2) an der mit der Antriebsrolle (7) zusammenwirkenden Seite eine Querprofilierung aufweisen.

11. Maschine nach einem der Ansprüche 1 bis 10, **dadurch gekennzeichnet, dass** die Antriebsrolle (7) an ihrer Oberfläche eine Querprofilierung aufweist.

12. Maschine nach Anspruch 10 und 11, **dadurch gekennzeichnet, dass** die Teilungen der Querprofilierungen der Antriebsrolle (7) und der Antriebsriemen der Ballenformeinrichtung (2) voneinander verschieden sind.

## Claims

1. Machine for picking up and pressing harvested agricultural crop, such for example as hay, grass or the like, having a winding chamber (3) able to be folded open for producing a bale in roll form, which winding chamber (3) is formed by at least one bale-forming means (2), the bale-forming means (2) being guided over at least one drive roller (7) located in a fixed position and forming, during a bale-forming phase, a winding chamber (3) which is able to expand from a size holding a small volume of harvested crop to a size holding a larger volume, having a storage means (24) for compensating for the portion of the bale-forming means (2) which is in excess, the storage means (24) cooperating during the bale-forming phase with a tensioning arrangement (13.1) which is designed to be yielding, and an at least approximately slip-free transmission from the at least one drive roller (7) to the bale-forming means of the drive torque which is required during the bale-forming phase being able to be achieved by means of the tensioning arrangement (13.1), the storage means (14) having a tensioning arm (19) which is provided with a direction-changing roller (18) and with which a means of storing force (13) engages, **characterised in that** the storage means (14) has a stop arrangement (22) which limits the deflection of the tensioning arm (19), thus enabling a limiting of the further expansion of the winding chamber (3) to be initiated by means of the stop arrangement (22), which has an abutment (23), and **in that**, after the bale-forming phase, a compressing force which can be generated to suit a settable larger volume is exerted from the outside inwards on the bale in the winding chamber (3) by the bale-forming means (2).

2. Machine according to claim 1, **characterised in that** the means of storing force (13) is a spring member.

3. Machine according to claim 1, **characterised in that**, relative to a reference plane which extends between a point at which the tensioning arm (19) is hinged to the chassis of the machine and an axis of rotation (24) of the direction-changing roller (18), force can be applied to the tensioning arm (19) of the tensioning arrangement (13.1) at an angle of from 60 to 120°.

4. Machine according to one of claims 1 to 3, **characterised in that**, in the direction of travel, the direction-changing roller (18) is arranged ahead of the rear end of the machine (1).

5. Machine according to one of claims 1 to 4, **characterised in that**, in the direction of travel, the direction-changing roller (18) is arranged to the rear of the centre of the bale of harvested crop which forms.

6. Machine according to one of claims 1 to 5, **characterised in that** the storage means (14) has arrangements for presetting a diameter for the bale of harvested crop.

7. Machine according to one of claims 1 to 6, **characterised in that** the arrangement, which takes the form of a stop arrangement (22), is arranged in a fixed position on the casing and can be set to a presettable deflection.

8. Machine according to one of claims 1 to 7, **characterised in that** the stop arrangement (22) can be set to different bale sizes by a change in angular position relative to the tensioning arm (19).

9. Machine according to one of claims 1 to 8, **characterised in that** the bale-forming means (2) comprises drive belts which are mounted at the outer ends of transverse bars (2.2).

10. Machine according to claim 9, **characterised in that** the drive belts of the bale-forming means (2) have transverse profiling on the side which co-operates with the drive roller (7).

11. Machine according to one of claims 1 to 10, **characterised in that** the drive roller (7) has transverse profiling on its surface.

12. Machine according to claims 10 and 11, **characterised in that** the pitches of the transverse profiling on the drive roller (7) and the drive belts of the bale-forming means (2) are different from one another.

## Revendications

1. Machine pour ramasser et presser des produits agricoles de récolte tels que par exemple du foin, de l'herbe ou des produits analogues, comportant une chambre d'enroulement (3), s'ouvrant par relevage, formée par au moins une installation de formation de balles (2), pour réaliser une balle ronde,
l'installation de formation de balles (2) étant guidée sur au moins un cylindre d'entraînement (7), fixe et pendant une phase de formation de balles, on réalise une chambre d'enroulement (3) qui peut se développer à partir d'une dimension de petit volume recevant les produits de récolte en une dimension recevant un volume plus important, comportant un accumulateur (14) pour compenser la partie excédentaire de l'installation de formation de balles (2), l'accumulateur (14) coopérant avec un dispositif tendeur (13.1), souple, au cours de la phase de formation de balles et le dispositif tendeur (13.1) permet d'obtenir une transmission au moins sensiblement sans patinage du couple d'entraînement nécessaire à la phase de formation de la balle, ce couple d'entraînement étant exercé sur l'installation de formation de balles (2) par au moins un cylindre d'entraînement (7),
l'accumulateur (14) ayant un bras tendeur (19) muni d'un cylindre de renvoi (18) et sur lequel agit un accumulateur de force (13),
**caractérisée en ce que**
l'accumulateur (14) comporte un dispositif de butée (22) limitant le débattement du bras tendeur (19) de façon que le dispositif de butée (22) avec un appui (23) puisse limiter la poursuite de l'extension de la chambre d'enroulement (3) et
après la phase de formation de la balle, une force de compression est exercée sur la balle dans la chambre d'enroulement (3), cette force étant appliquée pour un volume plus grand, réglable et elle est exercée de l'extérieur vers l'intérieur par l'installation de formation de balles (2).

2. Machine selon la revendication 1,
**caractérisée en ce que**
l'accumulateur de force (13) est un élément de ressort.

3. Machine selon la revendication 1,
**caractérisée en ce que**
le bras tendeur (19) du dispositif tendeur (13.1) est sollicité par une force par rapport à un plan de référence s'étendant entre un point d'articulation du bras tendeur (19) sur le châssis de la machine et un axe de rotation (24) du cylindre de renvoi (18), suivant un angle compris entre 60° et 120°.

4. Machine selon l'une des revendications 1 à 3,
**caractérisée en ce que**
le cylindre de renvoi (18) se situe en amont de l'extrémité arrière de la machine (1) selon le sens de déplacement.

5. Machine selon l'une des revendications 1 à 4,
**caractérisée en ce que**
le cylindre de renvoi (18) est prévu derrière le centre de la balle de produits de récolte en formation, selon le sens de déplacement.

6. Machine selon l'une des revendications 1 à 5,
**caractérisée en ce que**
l'accumulateur (14) comporte des dispositifs pour prédéfinir le diamètre de la balle de produits de récolte.

7. Machine selon l'une des revendications 1 à 6,
**caractérisée en ce que**
le dispositif réalisé comme dispositif de butée (22) est fixe et réglable par rapport à une butée prédéfinie.

8. Machine selon l'une des revendications 1 à 7,
**caractérisée en ce que**
le dispositif de butée (22) est réglable par une variation de la position angulaire par rapport au bras tendeur (19) selon différentes tailles de balle.

9. Machine selon l'une des revendications 1 à 8,
**caractérisée en ce que**
l'installation de formation de balles (2) comprend des courroies d'entraînement prévues à l'extrémité extérieure de traverses (2.2).

10. Machine selon la revendication 9,
**caractérisée en ce que**
les courroies d'entraînement de l'installation de formation de balles (2) ont un profilage transversal sur le côté coopérant avec le cylindre d'entraînement (7).

11. Machine selon l'une des revendications 1 à 10,
**caractérisée en ce que**
la surface supérieure du cylindre d'entraînement (7) présente un profilage transversal.

12. Machine selon les revendications 10 et 11,
**caractérisée en ce que**
les pas des profilages transversaux du cylindre d'entraînement (7) et de la courroie d'entraînement de l'installation de formation de balles (2) sont différents.
